# EUROPEAN PATENT SPECIFICATION

(11) **EP 1 990 478 B1**
(45) Date of publication and mention of the grant of the patent: **31.08.2011**
(21) Application number: 07388031.2
(22) Date of filing: 07.05.2007
(51) Int. Cl.: E04D 3/35, B32B 5/22, B32B 5/30, B32B 7/04, B32B 7/12, B32B 11/04, B32B 11/12

(54) **A building roof structure**
Dachkonstruktion für Gebäude
Structure de toit d'immeuble

(43) Date of publication of application: 12.11.2008
(73) Proprietor: ICOPAL A/S, DK-2730 Herlev (DK)
(72) Inventor: Zandvoort, Frits, 9628 AH Siddenburen (NL); Jensen, Poul Henning, 2820 Gentofte (NL)
(74) Representative: Sundien, Thomas

(56) References cited:
- DD-A1- 141 333
- DE-A1- 2 837 250
- US-A- 4 368 604
- US-A- 4 948 655

## Description

The present invention is related to a building roof structure including a layered protective and insulating covering, to a method of forming a heat insulating roof superstructure, and to a heat insulating board for a building roof structure.

Protective coverings for building roofs are well known in the art. When covering a roof, a coating sheet in the form of a bitumen-impregnated felt is laid out on the building roof and secured to the roof structure.

Unless due care is exercised, problems may be experienced after a period of use in that the bond between the coating sheet and the building roof is weakened. Even in the short term, when the roofer may still be walking on the building roof, problems may arise due to the coating sheet not being sufficiently bonded to the building roof.

US-A-4 948 655 shows a composite panel for obtaining waterproof roofings comprising a layer of heat insulating material and a layer of waterproof material secured to a face of the heat-insulating material. The surface of the heat-insulating material is defined by a coating of a layer of a waterproofing bitumen compound.

US-A-4 368 604 discloses an insulating panel for roof-covering comprising a heat insulating core layer of a synthetic foam material bonded adhesively on its topside to a sealing thermoplastic layer/sheet throughout the surface area of the topside, the core layer comprising at least two superimposed foam sheets of an elastic, closed cell cross-linked polyolefin foam material. The core layer may be adhesively bonded to synthetic resin sheets on the basis of soft PVC or ethylene-propylene-diene elastomer.

DE 28 37 250 shows a heat-insulating component used as water vapour-proof roof lining and comprises a plastics foam coated with an acrylic dispersion paint as vapour barrier through an airless-spraying method wherein moisture is evaporated.

DD 141 333 relates to aqueous, plasticizer- and solvent free acrylic ester copolymer dispersions used as temporary protective coatings on carrier layers onto which in-situ polyurethane foam layers are to be applied.The present invention is directed at providing an improved bond between a coating sheet, such as one including a bituminous web carrying an adhesive layer of bitumen, such as a layer of bitumen which tacks at the normal working temperature, and an insulating board of a building roof structure. Through the invention an improved short term and an improved long term bond is achieved. This is achieved by the invention defined in the appended claims.

As per the dependent claims an acrylic-based polymer may be used, preferably a thermoplastic polymer prepared from one or several monomers selected from the group consisting of methylmetacrylates, butylmetacrylates, ethylmetacrylates, butylacrylates, ethylacrylates, methylacrylates and ehtylhexylacrylates. Also mixtures of the acrylic-based polymers may be used.

The invention will now be discussed in further detail with reference to a preferred embodiment. The figures are not drawn to scale and do not suggest relative dimensions of the various layers.
Fig. 1 shows a cross-sectional view of an insulating material board used in the present invention,
Fig. 2 shows the making of a building roof structure according to the invention, incorporating boards as shown in fig. 1,
Fig. 3 shows a process of making a board as shown in fig. 1,
Fig. 4 shows another process for making a board as shown in fig. 1,
Fig. 5 shows a cross-sectional view of an embodiment of a coating sheet for the building roof structure, and
Fig. 6 shows a cross-sectional view of the layers on the slab shown in figs. 3 and 4, respectively

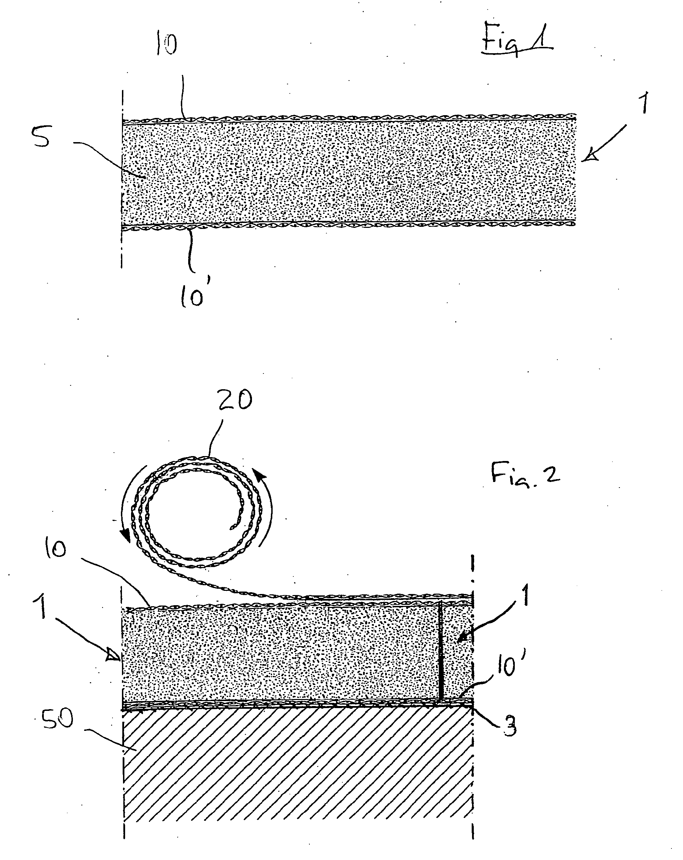

Fig 1 shows a board 1 formed from a mineral wool (such as Rockwool/stone wool or glass fiber) or expanded/foamed synthetic material heat insulating slab 5, the board 1 having an upper free surface defined by a layer 10 of a polymer, preferably an acrylic-based polymer; a particulate mineral filler material may be distributed in the matrix defined by the polymer. The board 1 may additionally be provided with a bottom layer 10' similar to the upper layer 10.
Fig. 2 shows to the right a building roof structure according to the invention where a roof construction 50 defined by eg. a concrete slab or a steel deck 50 supports two adjacent boards 1 of fig. 1. As shown, a vapour diffusion control barrier 3 may be present above the roof construction 50. The boards 1 provide the required heat insulation for the part of the building confined by the roof construction 50. The boards 1 may be anchored to the roof construction 50 by nails or may be glued to the vapour diffusion control barrier 3.

Fig. 2 shows to the left the process of making the building roof structure according to the invention wherein a coating sheet 20 is being rolled out on top of the boards 1 so as to establish a weatherproofing. This coating sheet 20 preferably includes a bitumen-impregnated core, such as a woven polyester web, carrying a layer of bitumen on either side. A granular material such as slate or sand may be spread on the upper layer of bitumen for providing a long-term protection of building roof structure against decay caused by the sun and the weather. Other coating sheets may subsequently or additionally be applied. The bitumen layer of the coating sheet 20 which contacts the board 1 preferably is a layer of a bituminous material having tacking properties at the ambient temperature when laying the protective covering, preferably at temperatures below about 50°C, and may contain additives providing any desired properties. The tacky bituminous material may in the rolled up form of the coating sheet 20 carry a removable plastics film allowing the coating sheet 20 to be rolled up after manufacture. The plastics film may be pulled off in the process of laying out the coating sheet 20. The coating sheet 20 may alternatively include an internal layer of a polymer, preferably an acrylic-based polymer as discussed below and, on this internal layer, a surface layer of an adhesive selected from the group of bitumen-based glues, this adhesive contacting the layer 10 of the board 1.

It will be understood that connection between the coating sheet 20 and the board 1 is established through the adhesive, such as the tacky bituminous material, sticking to the polymer layer 10 which may include a particulate material, as discussed below. In this manner, a highly reliable bond is formed with the coating sheet 20, and the risk of delamination of the composite structure, i.e. a separation of the coating sheet 20 from the board 1, is reduced.

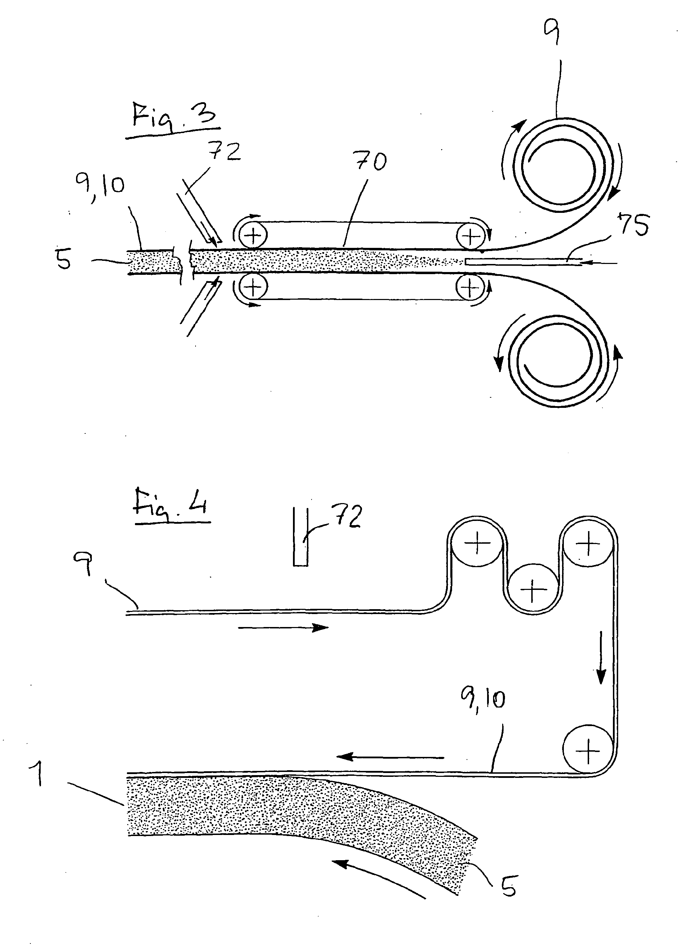

Fig. 3 shows one process for making the boards 1 on the basis of a slab of a foamed synthetic insulating material. In the process, two bitumen impregnated fibrous webs 9, or two foils 9, such as paper foil or an aluminium foil carrying a fibrous web, are stored in a rolled up form and are each being pulled into the gap between moving belts 70 so as to define a space in which a delivery apparatus 75 delivering a flow of the synthetic material is arranged. The delivery apparatus 75 operates in a manner to continuously deliver the synthetic material, such as PIR-polyisocyanurates/polyurethane, in a condition where it subsequently expands to fill out the gap between the moving belts 70 whereby a slab subsequently cut into the boards 1 continuously exit the space between the belts 70 on the left side thereof. By impregnation by the synthetic material the web 9 is reliably anchored to the slab 5.

On exiting the gap between the belts 70 a polymer dissolved, emulsified or dispersed in a liquid, such as water, is deposited on the top foil or web 9 and possibly also on the lower foil or web 9 using any appropriate means such as spraying devices 72 or preferably a surface contacting depositing roller. The liquid may additionally contain additives for controlling parameters such as the viscosity of the emulsion, dispersion or solution. These additives generally have no, or no significant, impact on the relevant final properties of the layer 10. Acrylic-based polymers generally will remain stable at the prevailing temperatures. Preferably, the polymer is a thermoplastic polymer prepared from one or several monomers selected from the group consisting of methylmetacrylates, butylmetacrylates, ethylmetacrylates, butylacrylates, ethylacrylates, methylacrylates and ehtylhexylacrylates or the monomer may be styrene, vinyltoluene, butadiene or acrylonotrile.

On leaving the gap between the belts 70 the synthetic material slab exhibits a high temperature resulting from the exothermic character of the process, and this high temperature brings about an evaporation of the liquid in which the polymer is emulsified, dispersed or dissolved, to thereby form the polymer layer 10 that defines the surface of the board 5. The layer 10 formed after evaporation of said liquid may in general have a thickness ranging between 0.005 mm and 0.045 mm, possibly even up to 0.15 mm.

Preferably, the substance applied by applicator 72 includes a mineral particulate filler material such as calcium carbonate, talc, china clay, barium sulphate, zinc oxide, zinc sulphite or lithopone, and preferably includes an additive which provides the substance with a given colour, such as ferrous oxide or ferric oxide.

Fig. 4 shows an alternative process for making boards 1 wherein an elongated slab of an insulating material, such as a mineral fiber web 5, is supplied to a point where a web 9 is provided to the top surface of the web 5.

The web 9 may in principle be based on a web 9 as described above with reference to fig. 3, which, to form surface layer 10, is provided with the polymer with or without any particulate filler material at station 72.

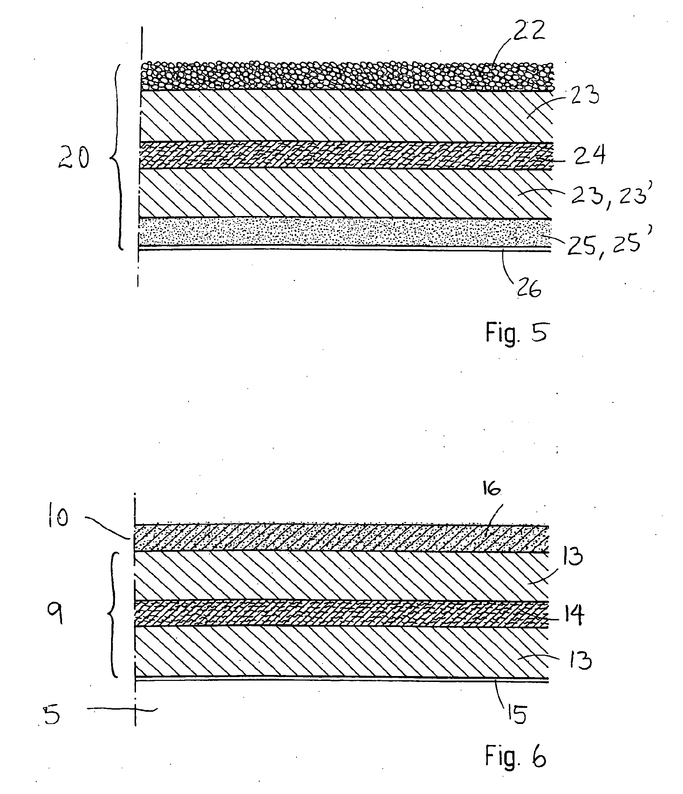

Fig. 5 shows a cross-sectional view of an embodiment of a coating sheet 20 of the building roof structure, and including a woven or non-woven core 24, such as a glass fiber or polyester web, impregnated with a bituminous material and covered on both sides with a respective bituminous layer 23. A layer 22 of sand faces upwards. The coating sheet 20 includes a coating sheet surface layer 25 of bitumen having, at the time of laying the coating sheet 20 on the boards 1, tacking properties at the ambient temperature, preferably at temperatures below 50°C or below about 50°C.

Fig. 6 shows a cross-sectional view of the layers 9, 10 on the slabs 5 shown in fig. 3 and 4, respectively. As shown, layer 9 may include a web 14, such as a glass fiber web, impregnated with a bituminous material and covered on both sides with a respective bituminous layer 13. The layer 10 defining the surface of the boards 1 of the building roof structure shown in fig. 1 and 2 is formed by the polymer, preferably the acrylic-based polymer after evaporation of the liquid in which the polymer is dissolved, dispersed or emulsified, and preferably includes a particle material 16. A protective sheet 15 may be applied on the lower side in case the bituminous layer 13 is adhesive, such as to allow the composite web 9, 10 shown in fig. 4 to be rolled up and to be unwound for direct application on the slab 5.

The coating sheet 20 shown in fig. 5 may on the lower side thereof alternatively include an acrylic-based layer 23' similar or identical to layer 10 discussed above, such as in replacement of the tacky bituminous layer 23 shown in fig. 5, and being applied onto the core 24. The layer 25 discussed above may in that case be replaced by a layer 25' of a bitumen-based glue. A plastics film 26 allows the coating sheet 20 to be rolled up.

The mineral wool or expanded/foamed synthetic material heat insulating slabs 5 referred to above typically may have dimensions in the order of 120 by 60 cm or 120 by 240, depending on the density, and preferably have a thickness from 10 cm and upwards. The number of boards 1 used in the building roof structure is not material to the invention; a single board sized as required could be used.

## Claims

1. A building roof structure including a layered covering, said layered covering comprising:
- a coating sheet (20) including a bitumen-impregnated core, and
- a plurality of heat insulating boards (1), said heat insulating boards being selected from the group of mineral fibre boards and foamed synthetic boards,
- the surface of said insulating boards (1) contacting said coating sheet (20) being defined by a surface layer (10) comprising a polymer selected among polymers that are soluble, dispersible or emulsifiable in a liquid.

2. The building roof structure according to claim 1, said polymer being an acrylic-based polymer.

3. The building roof structure of claim 1 or 2, said coating sheet (20) including a coating sheet surface layer (25) of bitumen having, at the time of laying said coating sheet (20) on said boards (1), tacking properties at the ambient temperature, preferably at temperatures below 50°C or below about 50°C, said coating sheet (20) surface layer (25) contacting said surface layer (10).

4. The building roof structure of claim 1 or 2, said coating sheet (20) including a layer (23') comprising a polymer, preferably an acrylic-based polymer, and a surface layer (25') of an adhesive, said adhesive preferably being selected from the group of bitumen-based glues.

5. The building roof structure according to any of the previous claims, including a slab shaped roof construction (50) carrying said boards (1).

6. The building roof structure according to any of the previous claims, said polymer being a thermoplastic polymer prepared from one or several monomers selected from the group consisting of methylmetacrylates, butylmetacrylates, ethylmetacryiates, butylacrylates, ethylacrylates, methylacrylates and ehtylhexylacrylates, or said monomer being styrene, vinyltoluene, butadiene or acrylonitrile

7. The building roof structure according to any of the previous claims, said surface layer (10) including a particulate material (16), preferably a mineral material, such as calcium carbonate, talc, china clay, barium sulphate, zinc oxide, zinc sulphite or lithopone.

8. The building roof structure according to the previous claim, said particulate material (16) further including particles of ferrous oxide or ferric oxide or any other pigment.

9. The building roof structure according to any of claims 7-8, said particulate material (16) having a particle size less than about 0.15 mm.

10. The building roof structure according to the previous claim wherein 95% by weight of said particulate material (16) has a particle size less than 0.15 mm.

11. The building roof structure according to the previous claim wherein 95% by weight of the particulate material (16) has a particle size less than 0.045 mm.

12. The building roof structure according to any of the previous claims 7-11, said surface layer (10) of said board (1) including at least 0.3 cm³ of said particulate material per m², of said board (1) and at most 200 cm³, of said particulate material per m² preferably between 1 cm³ and 40 cm³ most preferably between 3 cm³ and 20 cm³ of said particulate material per m² of said board (1).

13. The building roof structure according to any of the previous claims wherein said coating sheet (20) carries a layer (22) of slate, sand or gravel on the surface facing away from said boards (1).

14. The building roof structure according to any of the previous claims, said boards (1) being mechanically connected to the roof construction (50), or being adhered to the roof construction (50).

15. The building roof structure according to any of the previous claims, said layer (10) defining said surface of said boards (1) being formed by application of an emulsion, dispersion or solution of said polymer on a surface of said boards (1).

16. The building roof structure according to the previous claim, said emulsion, dispersion or solution being based on water.

17. A method for forming a building roof heat insulating superstructure (1) comprising the following steps:
- providing two cover sheets (9),
- continuously forming between said two cover sheets (9) a slab (5) of a synthetic material in a foaming operation generating reaction heat,
- applying on said slab (5) with said cover sheets (9) a layer (10) comprising a polymer dispersed, emulsified or dissolved in a liquid, and
- evaporating said liquid using said reaction heat.

18. The method according to claim 17, said polymer being an acrylic-based polymer.

19. The method according to claim 18, said polymer being a thermoplastic polymer prepared from one or several monomers selected from the group consisting of methylmetacrylates, butylmetacrylates, ethylmetacrylates, butylacrylates, ethylacrylates, methylacrylates and ehtylhexylacrylates, or being styrene, vinyltoluene, butadiene or acrylonitrile.

20. The method according to any of the previous claims 17-19, said emulsion, dispersion or solution being based on water.

21. The method according to any of the previous claims 17-20, said layer including a particulate material (16), preferably a mineral material, such as calcium carbonate, talc, china clay, barium sulphate, zinc oxide, zinc sulphite or lithopone, the particle size of said particulate material (16) being less than about 0.15 mm.

22. The method according to the previous claim wherein 95% by weight of the particulate material (16) has a particle size less than 0.15 mm.

23. The method according to the previous claim wherein 95% by weight of said particulate material (16) has a particle size less than 0.045 mm.

24. The method according to any of the previous claims 17-23, said particulate material (16) being in an amount yielding at least 0.3 cm³ of said particulate material per m² of said slab (5) and at most 200 cm³ of said particulate material per m² preferably between 1 cm³ and 40 cm³ most preferably between 3 cm³ and 20 cm³ of said particulate material (16) per m² of said slab (5).

25. A heat insulating board (1) for placing on a building roof construction, said heat insulating board being selected from the group of mineral fibre boards and foamed synthetic boards and having a surface defined by a layer (10) comprising a polymer, a bituminous layer (9) contacting said layer (10) defining said surface.

26. The heat insulating board (1) according to claim 25, said layer (10) comprising an acrylic-based thermoplastic polymer prepared from one or several monomers selected from the group consisting of methylmetacrylates, butylmetacrylates, ethylmetacrylates, butylacrylates, ethylacrylates, ethylmetacrylates and ehtylhexylacrylates. or styrene, vinyltoluene, butadiene or acrylonotrile.

27. The heat insulating board (1) according to any of the previous claims 25-26, said surface layer (10) including a particulate material (16), preferably a mineral material. such as calcium carbonate, talc, china clay, barium sulphate, zinc oxide, zinc sulphite or lithopone.

28. The heat insulating board (1) according to the previous claim, said particulate material (16) including particles of ferrous oxide or ferric oxide or any other pigment.

29. The heat insulating board (1) according to any of claims 28 or 29, said particulate material (16) having a particle size less than about 0.15 mm.

30. The heat insulating board (1) according to the previous claim wherein 95% by weight of said particulate material (16) has a particle size less than 0.15 mm.

31. The heat insulating board (1) according to the previous claim wherein 95% by weight of the particulate material (16) has a particle size less than 0.045 mm.

32. The heat insulating board (1) according to any of the previous claims 27-31, said surface layer (10) of said board (1) including at least 0.3 cm³ of said particulate material per cm² of said board (1) and at most 200 cm³ of said particulate material per cm² preferably between 1 cm³ and 40 cm³ most preferably between 3 cm³ and 20 cm³ of said particulate material per cm² of said board (1).

## Patentansprüche

1. Dachkonstruktion für Gebäude, enthaltend eine geschichtete Abdeckung, welche geschichtete Abdeckung:
- einen Auflagebogen (20), enthaltend einen bitumenimprägnierten Kern, und
- eine Mehrzahl von Wärmedämmplatten (1), welche Wärmedämmplatten aus der Gruppe von Mineralfaserplatten und geschäumten synthetischen Platten ausgewählt sind, umfasst,
- wobei die mit dem Auflagebogen (20) in Kontakt stehende Oberfläche der Wärmedämmplatten (1) durch eine Oberflächenschicht (10) definiert ist, umfassend ein Polymer, das unter Polymeren ausgewählt ist, welche in einer Flüssigkeit lösbar, dispergierbar oder emulgierbar sind.

2. Dachkonstruktion für Gebäude nach Anspruch 1, wobei das Polymer ein acrylbasiertes Polymer ist.

3. Dachkonstruktion für Gebäude nach Anspruch 1 oder 2, wobei der Auflagebogen (20) eine Auflagebogen-Oberflächenschicht (25) aus Bitumen enthält, aufweisend, zum Zeitpunkt des Anbringens des Auflagebogens (20) auf den Platten (1), Hafteigenschaften bei der Umgebungstemperatur, bevorzugt bei Temperaturen unter 50°C oder unter ungefähr 50°C, welche Auflagebogen- (20) Oberflächenschicht (25) mit der Oberflächenschicht (10) in Kontakt steht.

4. Dachkonstruktion für Gebäude nach Anspruch 1 oder 2, wobei der Auflagebogen (20) eine Schicht (23') enthält, umfassend ein Polymer, bevorzugt ein acrylbasiertes Polymer, und eine Oberflächenschicht (25') eines Klebemittels, welches Klebemittel bevorzugt aus der Gruppe von bitumenbasierten Klebstoffen ausgewählt ist.

5. Dachkonstruktion für Gebäude nach irgendeinem der vorhergehenden Ansprüche, enthaltend eine die Platten (1) tragende deckplattenförmige Dachkonstruktion (50).

6. Dachkonstruktion für Gebäude nach irgendeinem der vorhergehenden Ansprüche, wobei das Polymer ein thermoplastisches Polymer ist, das aus einem oder mehreren Monomeren hergestellt ist, ausgewählt aus der aus Methylmethacrylaten, Butylmethacrylaten, Ethylmethacryiaten, Butylacrylaten, Ethylacrylaten, Methylacrylaten und Ethylhexylacrylaten bestehenden Gruppe, oder das Monomer Styrol, Vinyltoluol, Butadien oder Acrylonitril ist.

7. Dachkonstruktion für Gebäude nach irgendeinem der vorhergehenden Ansprüche, wobei die Oberflächenschicht (10) ein partikelförmiges Material (16), bevorzugt ein mineralisches Material wie Calciumcarbonat, Talk, Kaolin, Bariumsulfat, Zinkoxid, Zinksulfit oder Lithopone, enthält.

8. Dachkonstruktion für Gebäude nach dem vorhergehenden Anspruch, wobei das partikelförmige Material (16) außerdem Partikel aus Ferrooxid oder Ferrioxid oder irgendeinem anderen Pigment enthält.

9. Dachkonstruktion für Gebäude nach irgendeinem der Ansprüche 7-8, wobei das partikelförmige Material (16) eine Partikelgröße weniger als ungefähr 0,15 mm aufweist.

10. Dachkonstruktion für Gebäude nach dem vorhergehenden Anspruch, wobei 95 Gew.-% des partikelförmigen Materials (16) eine Partikelgröße weniger als 0,15 mm aufweisen.

11. Dachkonstruktion für Gebäude nach dem vorhergehenden Anspruch, wobei 95 Gew.-% des partikelförmigen Materials (16) eine Partikelgröße weniger als 0,15 mm aufweisen.

12. Dachkonstruktion für Gebäude nach irgendeinem der vorhergehenden Ansprüche 7-11, wobei die Oberflächenschicht (10) der Platte (1) mindestens 0,3 cm³ des partikelförmigen Materials per cm² der Platte (1) und höchstens 200 cm³ des partikelförmigen Materials per m², bevorzugt zwischen 1 cm³ und 40 cm², am meisten bevorzugt zwischen 3 cm³ und 20 cm³ des partikelförmigen Materials per m² der Platte (1) enthält.

13. Dachkonstruktion für Gebäude nach irgendeinem der vorhergehenden Ansprüche, wobei der Auflagebogen (20) eine Schicht (22) aus Schiefer, Sand oder Kies auf der den Platten (1) abgewandten Oberfläche trägt.

14. Dachkonstruktion für Gebäude nach irgendeinem der vorhergehenden Ansprüche, wobei die Platten (1) mit der Dachkonstruktion (50) mechanisch verbunden sind oder an der Dachkonstruktion (50) geklebt sind.

15. Dachkonstruktion für Gebäude nach irgendeinem der vorhergehenden Ansprüche, wobei die die Oberfläche der Platten (1) definierende Schicht (10) durch Auftragen einer Emulsion, Dispersion oder Lösung des Polymers auf eine Oberfläche der Platten (1) gebildet ist.

16. Dachkonstruktion für Gebäude nach dem vorhergehenden Anspruch, wobei die Emulsion, Dispersion oder Lösung auf Wasser basiert.

17. Verfahren zur Bildung eines wärmedämmenden Überbaus (1) für ein Gebäudedach, umfassend die folgenden Schritte:
- Bereitstellung zweier Abdeckbögen (9),
- kontinuierliche Bildung einer Deckplatte (5) eines synthetischen Materials zwischen den beiden Abdeckbögen (9) in einem Schäumvorgang, wodurch eine Reaktionswärme erzeugt wird,
- Auftragen einer Schicht (10), umfassend ein in einer Flüssigkeit dispergiertes, emulgiertes oder gelöstes Polymer, auf die Deckplatte (5) mit den Abdeckbögen (9) und
- Verdampfen der Flüssigkeit durch Verwendung der Reaktionswärme.

18. Verfahren nach Anspruch 17, wobei das Polymer ein acrylbasiertes Polymer ist.

19. Verfahren nach Anspruch 18, wobei das Polymer ein thermoplastisches Polymer ist, das aus einem oder mehreren Monomeren hergestellt ist, ausgewählt aus der aus Methylmethacrylaten, Butylmethacrylaten, Ethylmethacrylaten, Butylacrylaten, Ethylacrylaten, Methylacrylaten und Ethylhexylacrylaten bestehenden Gruppe, oder Styrol, Vinyltoluol, Butadien oder Acrylonitril ist.

20. Verfahren nach irgendeinem der vorhergehenden Ansprüche 17-19, wobei die Emulsion, Dispersion oder Lösung auf Wasser basiert.

21. Verfahren nach irgendeinem der vorhergehenden Ansprüche 17-20, wobei die Schicht ein partikelförmiges Material (16), bevorzugt ein mineralisches Material wie Calciumcarbonat, Talk, Kaolin, Bariumsulfat, Zinkoxid, Zinksulfit oder Lithopone, enthält, wobei die Partikelgröße des partikelförmigen Materials (16) weniger als ungefähr 0,15 mm beträgt.

22. Verfahren nach dem vorhergehenden Anspruch, wobei 95 Gew.-% des partikelförmigen Materials (16) eine Partikelgröße weniger als 0,15 mm aufweisen.

23. Verfahren nach dem vorhergehenden Anspruch, wobei 95 Gew.-% des partikelförmigen Materials (16) eine Partikelgröße weniger als 0,045 mm aufweisen.

24. Verfahren nach irgendeinem der vorhergehenden Ansprüche 17-23, wobei das partikelförmige Material (16) in einer Menge vorliegt, die mindestens 0,3 cm³ des partikelförmigen Materials per m² der Deckplatte (5) und höchstens 200 cm³ des partikelförmigen Materials per m², bevorzugt zwischen 1 cm³ und 40 cm³, am meisten bevorzugt zwischen 3 cm³ und 20 cm³ des partikelförmigen Materials (16) per m² der Deckplatte (5) ergibt.

25. Wärmedämmplatte (1) zum Anbringen auf einer Dachkonstruktion für Gebäude, wobei die Wärmedämmplatte aus der Gruppe von Mineralfaserplatten und geschäumten synthetischen Platten ausgewählt ist und eine Oberfläche aufweist, welche durch eine ein Polymer umfassende Schicht (10) definiert ist, wobei eine bituminöse Schicht (9) mit der die Oberfläche definierenden Schicht (10) in Kontakt steht.

26. Wärmedämmplatte (1) nach Anspruch 25, wobei die Schicht (10) ein acrylbasiertes thermoplastisches Polymer, das aus einem oder mehreren Monomeren hergestellt ist, ausgewählt aus der aus Methylmethacrylaten, Butylmethacrylaten, Ethylmethacryiaten, Butylacrylaten, Ethylacrylaten, Ethylmethacrylaten und Ethylhexylacrylaten bestehenden Gruppe, oder Styrol, Vinyltoluol, Butadien oder Acrylonitril umfasst.

27. Wärmedämmplatte (1) nach irgendeinem der vorhergehenden Ansprüche 25-26, wobei die Oberflächenschicht (10) ein partikelförmiges Material (16), bevorzugt ein mineralisches Material wie Calciumcarbonat, Talk, Kaolin, Bariumsulfat, Zinkoxid, Zinksulfit oder Lithopone, enthält.

28. Wärmedämmplatte (1) nach dem vorhergehenden Anspruch, wobei das partikelförmige Material (16) Partikel aus Ferrooxid oder Ferrioxid oder irgendeinem anderen Pigment enthält.

29. Wärmedämmplatte (1) nach irgendeinem der Ansprüche 28 oder 29, wobei das partikelförmige Material (16) eine Partikelgröße weniger als ungefähr 0,15 mm aufweist.

30. Wärmedämmplatte (1) nach dem vorhergehenden Anspruch, wobei 95 Gew.-% des partikelförmigen Materials (16) eine Partikelgröße weniger als 0,15 mm aufweisen.

31. Wärmedämmplatte (1) nach dem vorhergehenden Anspruch, wobei 95 Gew.-% des partikelförmigen Materials (16) eine Partikelgröße weniger als 0,045 mm aufweisen.

32. Wärmedämmplatte (1) nach irgendeinem der vorhergehenden Ansprüche 27-31, wobei die Oberflächenschicht (10) der Platte (1) mindestens 0,3 cm³ des partikelförmigen Materials per m² der Platte (1) und höchstens 200 cm³ des partikelförmigen Materials per m², bevorzugt zwischen 1 cm³ und 40 cm³, am meisten bevorzugt zwischen 3 cm³ und 20 cm³ des partikelförmigen Materials per m² der Platte (1) enthält.

## Revendications

1. Structure de toit d'immeuble, comprenant une couverture en couches, ladite couverture en couches comprenant:
- une tôle à revêtement (20) comportant un noyau imprégné de bitume, et
- une pluralité de panneaux calorifuges (1), lesdits panneaux calorifuges étant sélectionnés parmi le groupe composé de panneaux de fibres minérales et de panneaux synthétiques moussés,
- la surface desdits panneaux calorifuges (1) en contact avec ladite tôle à revêtement (20) étant défini par une couche de surface (10) comprenant un polymère sélectionné parmi les polymères qui sont solubles, dispersibles ou émulsifiables dans un liquide.

2. Structure de toit d'immeuble selon la revendication 1, ledit polymère étant un polymère à base acrylique.

3. Structure de toit d'immeuble selon la revendication 1 ou 2, ladite tôle à revêtement (20) comprenant une couche de surface de tôle à revêtement (25) de bitume présentant, au moment de la pose de ladite tôle à revêtement (20) sur lesdits panneaux (1), des propriétés d'adhésion à la température ambiante, préférablement à des températures inférieures à 50°C ou inférieures à environ 50°C, ladite couche de surface (25) de tôle à revêtement (20) étant en contact avec ladite couche de surface (10).

4. Structure de toit d'immeuble selon la revendication 1 ou 2, ladite tôle à revêtement (20) contenant une couche (23') comprenant un polymère, préférablement un polymère à base acrylique, et une couche de surface (25') d'un adhésif, ledit adhésif étant préférablement sélectionné parmi le groupe composé de colles à base de bitume.

5. Structure de toit d'immeuble selon l'une quelconque des revendications précédentes, comprenant une construction de toit en forme de dalles (50) portant lesdits panneaux (1).

6. Structure de toit d'immeuble selon l'une quelconque des revendications précédentes, ledit polymère étant un polymère thermoplastique préparé à partir d'un ou plusieurs monomères sélectionnés parmi le groupe composé de méthacrylates de méthyle, méthacrylates de butyle, méthacrylates d'éthyle, acrylates de butyle, acrylates d'éthyle, acrylates de méthyle et acrylates d'éthylhexyle, ou ledit monomère étant styrène, vinyltoluène, butadiène ou acrylonitrile.

7. Structure de toit d'immeuble selon l'une des revendications précédentes, ladite couche de surface (10) comprenant un matériau à particules (16), préférablement un matériau minéral tel que carbonate de calcium, talc, kaolin, sulfate de baryum, oxyde de zinc, sulfite de zinc ou lithopone.

8. Structure de toit d'immeuble selon la revendication précédente, ledit matériau à particules (16) comprenant en outre des particules d'oxyde ferreux ou d'oxyde ferrique ou de tout autre pigment.

9. Structure de toit d'immeuble selon l'une quelconque des revendications 7 à 8, ledit matériau à particules (16) ayant une granulométrie inférieure à environ 0,15 mm.

10. Structure de toit d'immeuble selon la revendication précédente, dans laquelle 95% en poids dudit matériau à particules (16) présente une granulométrie inférieure à 0,15 mm.

11. Structure de toit d'immeuble selon la revendication précédente, dans laquelle 95% en poids du matériau à particules (16) présente une granulométrie inférieure à 0,045 mm.

12. Structure de toit d'immeuble selon l'une quelconque des revendications précédentes 7 à 11, ladite couche de surface (10) dudit panneau (1) comprenant au moins 0,3 cm³ du matériau à particules par m², dudit panneau (1) et d'au plus 200 cm³, dudit matériau à particules par m² préférablement entre 1 cm³ et 40 cm³, le plus préférablement entre 3 cm³ et 20 cm³ dudit matériau à particules par m² dudit panneau (1).

13. Structure de toit d'immeuble selon l'une quelconque des revendications précédentes, dans laquelle ladite tôle à revêtement (20) porte une couche (22) d'ardoise, de sable ou de gravier sur la surface détournée desdits panneaux (1).

14. Structure de toit d'immeuble selon l'une quelconque des revendications précédentes, lesdits panneaux (1) étant reliés mécaniquement à la construction de toit (50), ou étant adhérés à la construction de toit (50).

15. Structure de toit d'immeuble selon l'une quelconque des revendications précédentes, ladite couche (10) définissant ladite surface desdits panneaux (1) étant formée par l'application d'une émulsion, d'une dispersion ou d'une solution dudit polymère sur une surface desdits panneaux (1).

16. Structure de toit d'immeuble selon la revendication précédente, ladite émulsion, dispersion ou solution étant basées sur l'eau.

17. Procédé pour former une superstructure de construction de toit calorifuge (1), comprenant les étapes suivantes:
- fournir deux tôles protectrices (9),
- former de manière continue entre lesdites deux tôles protectrices (9) une dalle (5) d'un matériau synthétique dans un procédé de moussage générant de la chaleur de réaction,
- appliquer sur ladite dalle (5) avec lesdites tôles protectrices (9) une couche (10) comprenant un polymère dispersé, émulsionné ou dissous dans un liquide, et
- évaporer ledit liquide en utilisant ladite chaleur de réaction.

18. Procédé selon la revendication 17, ledit polymère étant un polymère à base acrylique.

19. Procédé selon la revendication 18, ledit polymère étant un polymère thermoplastique préparé à partir d'un ou de plusieurs monomères sélectionnés parmi le groupe composé de méthacrylates de méthyle, méthacrylates de butyle, méthacrylates d'éthyle, acrylates de butyle, acrylates d'éthyle, acrylates de méthyle et acrylates d'éthylhexyle, ou étant styrène, vinyltoluène, butadiène ou acrylonitrile.

20. Procédé selon l'une quelconque des revendications précédentes 17 à 19, ladite émulsion, dispersion ou solution étant basées sur l'eau.

21. Procédé selon l'une quelconque des revendications précédentes 17 à 20, ladite couche comprenant un matériau à particules (16), préférablement un matériau minéral tel que carbonate de calcium, talc, kaolin, sulfate de baryum, oxyde de zinc, sulfite de zinc ou lithopone, la granulométrie dudit matériau à particules (16) étant inférieure à 0,15 mm.

22. Procédé selon la revendication précédente, dans lequel 95% en poids du matériau à particules (16) présente une granulométrie inférieure à 0,15 mm.

23. Le procédé selon la revendication précédente, dans lequel 95% en poids dudit matériau à particules (16) présente une granulométrie inférieure à 0,045 mm.

24. Procédé selon l'une quelconque des revendications précédentes 17 à 23, ledit matériau à particules (16) étant d'une quantité donnant au moins 0,3 cm³ dudit matériau à particules par m² de ladite dalle (5) et d'au plus 200 cm³ dudit matériau à particules par m² préférablement entre 1 cm³ et 40 cm³, le plus préférablement entre 3 cm³ et 20 cm³ dudit matériau à particules (16) par m² de ladite dalle (5).

25. Panneau calorifuge (1) pour la pose sur une construction de toit d'immeuble, ledit panneau calorifuge étant sélectionné parmi le groupe de panneaux de fibres minérales et de panneaux synthétiques moussés et présentant une surface définie par une couche (10) comprenant un polymère, une couche bitumineuse (9) en contact de ladite couche (10) définissant ladite surface.

26. Panneau calorifuge (1) selon la revendication 25, ladite couche (10) comprenant un polymère thermoplastique à base acrylique préparé à partir d'un ou plusieurs monomères sélectionnés parmi le groupe composé de méthacrylates de méthyle, méthacrylates de butyle, méthacrylates d'éthyle, acrylates de butyle, acrylates d'éthyle, méthacrylates d'éthyle et acrylates d'éthylhexyle, ou styrène, vinyltoluène, butadiène ou acrylonitrile.

27. Panneau calorifuge (1) selon l'une quelconque des revendications précédentes 25 à 26, ladite couche de surface (10) comprenant un matériau particulaire (16), préférablement un matériau minéral tel que carbonate de calcium, talc, kaolin, sulfate de baryum, oxyde de zinc, sulfite de zinc ou lithopone.

28. Panneau calorifuge (1) selon la revendication précédente, ledit matériau à particules (16) comprenant des particules d'oxyde ferreux ou d'oxyde ferrique ou de tout autre pigment.

29. Panneau calorifuge (1) selon l'une quelconque des revendications 28 ou 29, ledit matériau à particules (16) présentant une granulométrie inférieure à environ 0,15 mm.

30. Panneau calorifuge (1) selon la revendication précédente, dans lequel 95% en poids dudit matériau à particules (16) présente une granulométrie inférieure à 0,15 mm.

31. Panneau calorifuge (1) selon la revendication précédente, dans lequel 95% en poids dudit matériau à particules (16) présente une granulométrie inférieure à 0,045 mm.

32. Panneau calorifuge (1) selon l'une des revendications précédentes 27 à 31, ladite couche de surface (10) dudit panneau (1) comprenant au moins 0,3 cm³ dudit matériau à particules par m², dudit panneau (1) et d'au plus 200 cm³ dudit matériau à particules par m² préférablement entre 1 cm³ et 40 cm³, le plus préférablement entre 3 cm³ et 20 cm³ dudit matériau à particules par m² dudit panneau (1).
